# EUROPEAN PATENT APPLICATION

(11) **EP 1 326 443 A2**
(43) Date of publication of application: **09.07.2003**
(21) Application number: 02028425.3
(22) Date of filing: 18.12.2002
(51) Int. Cl.: H04N 5/92

(54) **Disk apparatus, and recording method using the same**

(30) Priority: 27.12.2001 JP 2001398171
(71) Applicant: Kabushiki Kaisha Toshiba, Tokyo (JP)
(72) Inventor: Kanai, Masaya, K. K. Toshiba, Intel. Prop.Division, Tokyo 105-8001 (JP); Unno, Hiroaki, K. K. Toshiba, Intel. Prop.Division, Tokyo 105-8001 (JP)
(74) Representative: Henkel, Feiler, Hänzel

(57) **Abstract**

A disk apparatus for recording video information on a disk has a detection feature (16, 17, 18) of detecting the change in the attributes of the video information given to it, a generation feature (16, 17, 18) of generating entry point information indicating the position at which the change in the attributes takes place whenever such a change in the attributes is detected and a recording feature (22, 28, 29, 64) of recording the entry point information (3, 5, 6) and the video information in a recording region of the disk according to the DVD-VR (Video Recording) format. With this arrangement, video information conforming to the DVD-V (Video) format can be obtained reliably by conversion because the position at which the attributes change can be detected on the basis of the entry point information.

## Description

This invention relates to a disk apparatus and, more particularly, it relates to a disk apparatus adapted to convert video information conforming to the DVD (Digital Versatile Disk) - VR (Video Recording) format to video information conforming to the DVD - V (Video) format.

The DVD - VR Specification (DVD format for Rewritable / Re-recordable Disks Part 3 : VIDEO RECORDING) allows to change the video aspect ratio and the audio channel mode in a VOB (Video Object, which refers to movie video). However, whether the video aspect ratio and the audio channel mode "are constant" or "may have been changed" in a VOB can only be ascertained from the management information. In the case where they may have been changed, it is necessary to check each RDI_PCK (Real time Data Information pack) located at the top of each VOBU (Video Object Unit) in the VOB for video and each A_PCK (Audio pack) in the VOB for audio in order to determine where the attributes have changed in the VOB.

On the other hand, the DVD-V format (DVD format for Read-Only Disks Part 3 : VIDEO FORMAT) requires that the video attributes of all the titles in a VTS need to be constant, and the audio attributes in a PGC also be constant. Therefore, for the recorded data conforming to the DVD-VR format to be converted into data conforming to the DVD-V format, it is necessary to guarantee that the video attributes and the audio attributes in the data conforming to the DVD-VR format that are to be converted into a PGC conforming to the DVD-V format are constant. In other words, if the attributes in the data to be converted are not constant, either no conversion actually takes place or the data to be converted need to be split into independent PGCs or VTSs in such a way that the attributes become constant in each of them before the data is actually converted.

However, it is not possible to tell from the management information where the attributes have been changed in the VOB of data conforming to the DVD-VR format. Therefore, if it is judged on the basis of the management information for the VOB containing data conforming to the DVD-VR format that the video attributes and the audio attributes thereof "may have been changed", it is necessary to closely look into the stream in the data to be converted for each converting operation. Then, there arises a problem that such a cumbersome checking operation significantly influences the overall processing time necessary for the conversion.

In view of the above identified problem, the present invention may provide a disk apparatus and related apparatus that are equipped with a feature for adding information on the change in the attributes including information on the position where the change in the video attributes or the audio attributes took place in the VOB as entry point information to video information conforming to the DVD-VR format.

In one embodiment of the invention, it is achieved by providing a disk apparatus for recording video information on a disk, the apparatus comprises detection section for detecting a change in the attributes of the video information having a predetermined format; generation section for generating positional information indicating the position of occurrence of the change in the attributes as entry point information upon detecting the change in the attributes of the video information; and recording section for recording the entry point information generated by the generation section and the video information in a recording area of the disk according to the predetermined format.

Thus, a video disk apparatus according to one embodiment of the invention detects the video information to be recorded, generates information on the position where the attributes of the video information, such as the video aspect ratio, and the attributes of the audio information, such as the channel mode change, as entry point information and automatically records the entry point information in a recording area of a disk according to the DVD-VR format along with the video information, during the operation of recording the latter. As a result, an operation for converting video information conforming to the DVD-VR format into video information conforming to the DVD-V format that has hitherto been relatively difficult can be conducted reliably within a significantly reduced period of time because the position where the attributes change can be clearly identified by referring to the entry point information, so that it is no longer necessary to read the entire stream of video information and elaborately check the video information in order to detect the position where the attributes of the video information change. Thus, the time consumed for the operation for converting information conforming to one format to another can be greatly reduced, and the operation can be conducted reliably.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a schematic illustration of ORG_PGCI in RTR_VMG containing information on a change in the attributes as prepared according to the invention;
FIG. 2 is a schematic illustration of M_AVFIT in RTR_VMG which is management information conforming to the DVD-VR format as prepared according to the invention;
FIG. 3 is a schematic block diagram of an embodiment of optical disk recording / reproducing apparatus according to the invention and equipped with a feature for inter-format conversion and that of editing for the purpose of handling information on a change in attributes;
FIG. 4 is a schematic illustration of RDI_PCK as prepared according to the invention;
FIG. 5 is a schematic illustration of RDI data as prepared according to the invention;
FIG. 6 is a schematic illustration of A_PCK of linear PCM as prepared according to the invention;
FIG. 7 is a schematic illustration of the configuration of audio data information as prepared according to the invention;
FIG. 8 is a schematic illustration of Dolby AC-3 in A_PCK of linear PCM as prepared according to the invention;
FIG. 9 is a schematic illustration of the inside of A_PCK of MPEG Audio format 1 as prepared according to the invention;
FIG. 10 is a schematic illustration of the inside of A_PCK of MPEG Audio format 2 as prepared according to the invention; and
FIG. 11 is a flow chart of a processing operation for generating and adding information on a change in attributes of a disk recording / reproducing apparatus according to the invention.

Now, the present invention will be described in greater detail by referring to the accompanying drawings that illustrate preferred embodiments of the invention.

### <1st Embodiment>

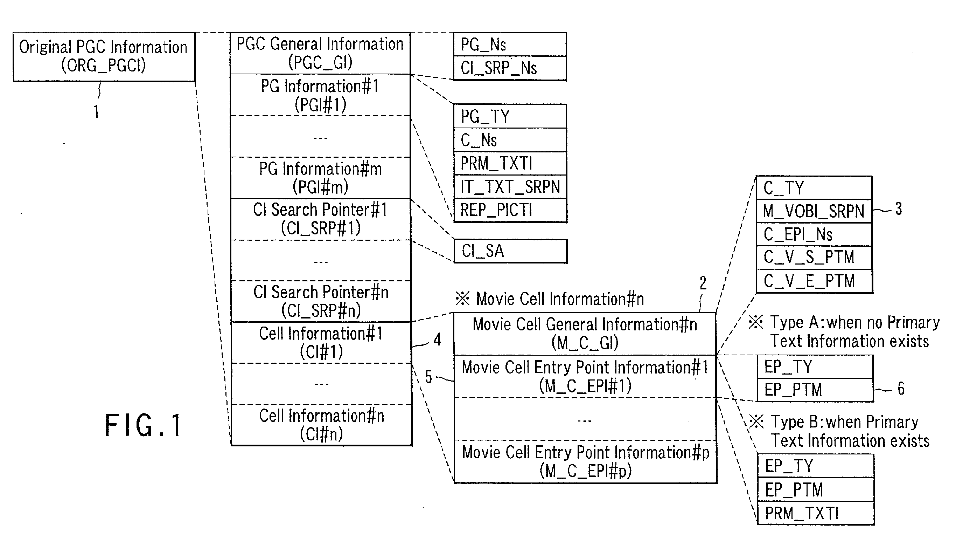

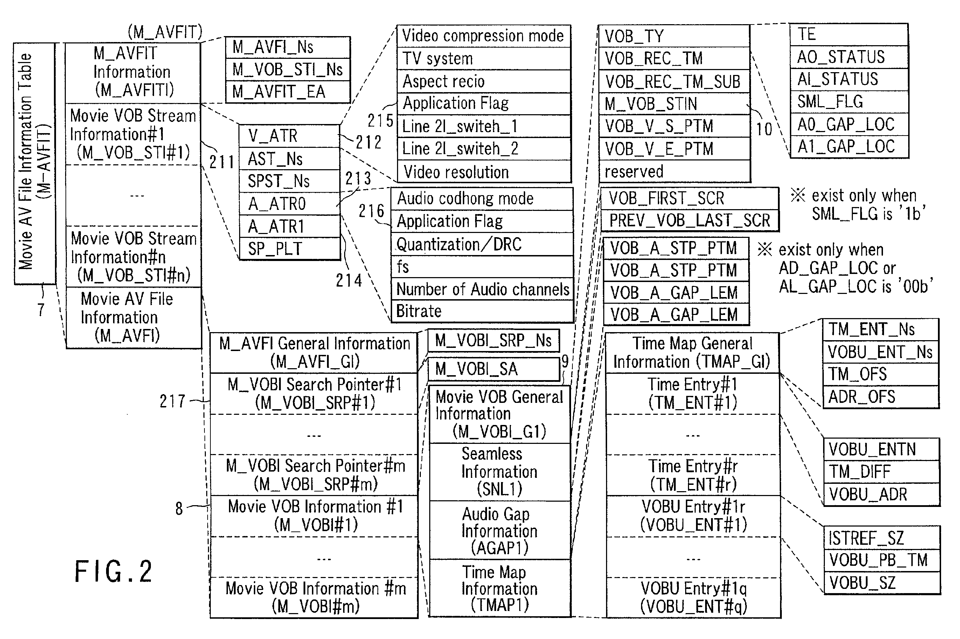

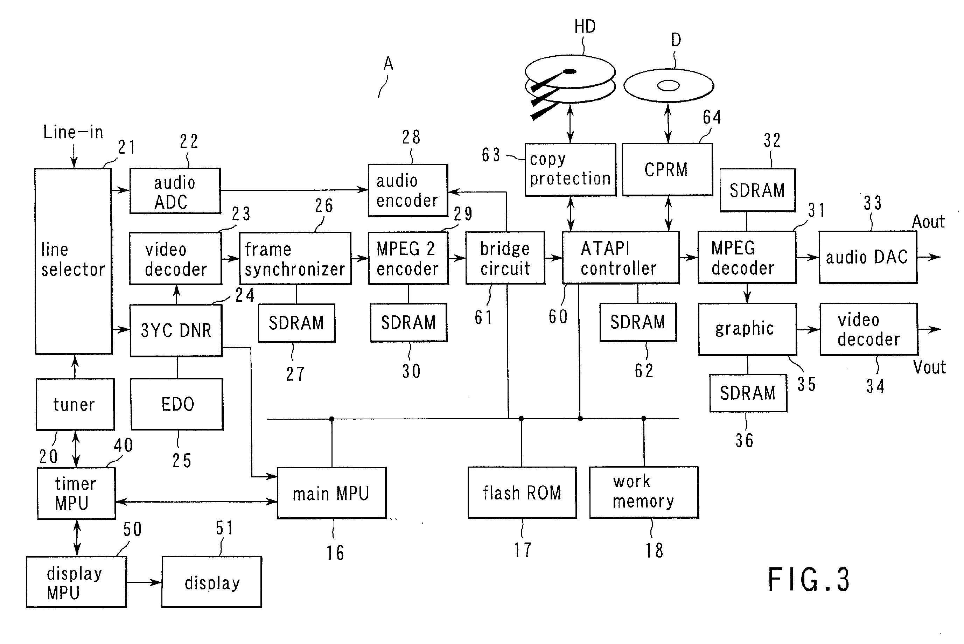

The first embodiment of the invention is adapted to detect the change in the video aspect ratio or the audio channel mode by means of hardware in a recording operation, and automatically add an entry point for the change. FIG. 1 is a schematic illustration of ORG_PGCI in RTR_VMG containing information on a change in the attributes as prepared according to the invention and FIG. 2 is a schematic illustration of M_AVFIT in RTR_VMG which is management information conforming to the DVD-VR format, whereas FIG. 3 is a schematic block diagram of an embodiment of optical disk recording / reproducing apparatus according to the invention and equipped with a functional feature of inter-format conversion and that of editing for the purpose of handling information on a change in attributes.

### (Data Structure According to DVD-VR format)

Firstly, the DVD-VR format will be briefly discussed. FIG. 2 is a schematic illustration of M_AVFIT (Movie AV File Information Table) 7 in RTR VMG which is management information conforming to the DVD-VR format.

Referring to FIG. 2, M_VOBI (Movie VOB Information) 8 shows the information of each VOB and the number of M_VOB_STI (Movie VOB Stream Information) that corresponds to the stream information of the VOB is specified by M_VOB_STIN10 in M_ VOB_GI (Movie VOB General Information) 9. The video attributes (V_ATR) 212 and the audio attributes (A_ATR) 213, 214 (not shown) of the VOB are described in M_VOB_STI211. As the attribute information on the video attributes and the audio attributes change somewhere on the stream, the change can influence the ongoing recording operation when information conforming to the DVD-VR format needs to be converted into information conforming to the DVD-V format. Therefore, it is necessary to quickly and reliably detect the change in the attribute information.

When the application flag 215 of V_ATR is "00b", it indicates that the attributes of the video stream are constant in the VOB. When, on the other hand, it is "01b", it indicates that the aspect ratio of the video stream may have been changed in the VOB. Similarly, when the application flag 216 of A_ATR is "00b", it indicates that the attributes of the audio stream are constant in the VOB. When, on the other hand, it is "01b", it indicates that the number of audio channels of the audio stream may have been changed in the VOB. In this way, it is possible to check if the attributes have been changed or not by referring to the application flag. However, it is necessary to check the stream in detail in order to detect the position where the attributes have been changed. Thus, an operation of converting information conforming to one format into information conforming to another format can be conducted quickly and reliably if information on the change in the attributes including information on the position where the attributes are changed is provided at a predetermined position.

FIG. 1 is a schematic illustration of ORG_PGCI (Original PGC Information) 1 in RTR_VMG. In FIG. 1, CI (Cell Information) 4 shows the information of each cell and M_VOBI_SRPN3 in M_C_GI (Movie Cell General Information) 2 specifies the number of the search pointer (M_VOBI_SRP) 217 of M_VOBI that corresponds to the cell.

In the CI, M_C_EPI (Movie Cell Entry Point Information) 5 is described for as many entry points as those found in the cell. The position of each entry point is specified as PTM (Presentation Time) by EP_PTM 6.

With the above described arrangement, it will be seen that an entry point can be added to the position where the video aspect ratio or the audio channel mode is changed in the VOB by storing PTM at the time when the aspect ratio or the audio channel mode is changed in the video being recorded and preparing M_C_EPI having the value thereof in EP_PTM6.

### (Structure of Optical Disk Recording / Reproducing Apparatus)

FIG. 3 is a schematic block diagram of an embodiment of optical disk recording / reproducing apparatus according to the invention and equipped with a functional feature of inter-format conversion and that of editing. The overall operation of the optical disk recording / reproducing apparatus A is controlled by main MPU 16 by way of a data bus. The main MPU 16 is provided with a flash ROM 17 and a work memory 18. The apparatus comprises a hard disk HD, a line selector 21 provided with a tuner 20 and a line-in and adapted to be used mainly for recording video information on an optical disk D, an audio AD converter 22 to which signals are fed from the line selector 21, a video detector 23 to which video signals are supplied by way of 3YCDNR 24 provided with EDO 25 and a frame synchronizer 26 to which frame signals are supplied and which is provided with SDRAM 27. The apparatus additionally comprises an audio encoder 28 for encoding audio signals from the audio AD converter 22 and an MPEG2 encoder 29 adapted to receive video signals from the frame synchronizer 26 and perform an encoding processing operation on MPEG signals and provided with SDRAM 30. As means for storing video information, it also comprises a hard disk driver HD and an optical disk D connected to it respectively by way of copy protection 63 and CPRM 64.

The tuner 20 is controlled by timer MPU 40 for its operation. Similarly, display 51 is controlled by display MPU 50 under the control of the timer MPU 40.

As pointed out above, the apparatus further comprises for its functional feature of reproducing video information a hard disk driver HD connected to it by way of the copy protection 63 and an optical disk D connected to it by way of the CPRM 64. It additionally comprises an ATAPI controller 60 for processing the read out video signal, an MPEG decoder 31 which is provided with SDRAM 32 and adapted to decode the video signal supplied from the ATAPI controller 60, a graphic circuit 35 provided with SDRM 36, a video decoder 34 to which the output of the graphic circuit 35 is supplied and which is adapted to decode video signals and an audio DA converter 33 adapted to convert the audio signal from the MPEG decoder 31. It further comprises a bridge circuit 61 that is controlled by the main MPU and adapted to operate as a circuit for intermediating the recording function and the reproducing function.

### (Operation)

All the blocks of the optical disk apparatus A are controlled by the main microprocessor (main MPU) section 16 according to the operation program stored in the flash ROM 17 for recording, reproducing and editing information and also for converting information conforming to the DVD-VR format to information conforming to the DVD-V format.

Now, an operation of recording information on changed attributes along with a video signal will be described in detail because such a recording operation provides a characteristic feature of the present invention. A signal is applied to the line selector 21 from the line-in or the tuner 20. The signal from the TV tuner section 20 is divided into a video signal and an audio signal, which are then respectively supplied to the MPEG2 encoder section 29 and the audio encoder section 28.

The audio encoder section 28 performs an operation of AC-3 type compression or MPEG type compression on the digital audio signal. The digital audio signal may. alternatively be recorded in the linear PCM format without compression. The TV tuner section 20 can detect the audio channel mode (mono / stereo / dual-mono) and the detected information is input to the main MPU section 10 by way of the timer MPU section 40. The audio encoder section 28 encodes the signal according to the information on the channel mode from the main MPU section 16. When the channel mode shows a change, the main MPU section 16 notifies it to the audio encoder section 28 and stores the PTM of the change in the work RAM / SDRAM section 18.

The MPEG2 encoder section 29 performs an operation of MPEG type compression on the digital video signal and formats it according to the DVD-VR format along with the output of the audio encoder section 28. The video aspect ratio can be detected by the 3YC DNR section 24 and the information on the aspect ratio detected by the section 24 is input to the main MPU section. The MPEG2 encoder section 29 encodes the video signal according to the information from the main MPU section. When the aspect ratio shows a change, the main MPU section notifies it to the MPEG2 encoder section 29 and stores the PTM of the change in the work RAM / SDRAM section 18.

The data formatted by the MPEG2 encoder section 29 is recorded in the disk D or the recording medium HD by way of ATAPI controller section 60. The main MPU 16 prepares management information concerning the recorded data and stores it in the work RAM / SDRAM section 18 before it is recorded in the disk D or the recording medium HD.

When a change is detected in the audio channel mode or the video aspect ratio, the PTM stored in the work RAM / SDRAM section 18 as information on the change in the attributes is recorded in the M_C_EPI 5 as EP_PTM 6.

The information on the change in the attributes is read out particularly when the video information conforming to the DVD-VR format into video information conforming to the DVD-V format so that, as a result, the positional information on the change in the attributes can be referred to and hence it is no longer necessary to detect the change in the attributes by referring to the entire stream of the video information. Thus, it is now possible to perform an operation of converting information conforming to one format into information conforming to another format can be conducted quickly and reliably.

As described above, the first embodiment of optical disk apparatus can detect the information on the position where the attributes of the video information such as the video aspect ratio and the attributes of the audio information such as the channel mode change as entry point information so that it is no longer necessary to read the entire stream of video information and elaborately check the video information in order to detect the position where the attributes of the video information change. Thus, the time taken for an operation of converting information conforming to one format into information conforming to another format can be greatly reduced, and the operation can be conducted reliably.

### <2nd Embodiment>

The second embodiment of the invention is adapted to check RDI_PCK and A_PCK for recorded data that conforms to the DVD-VR format and identifies an operation of adding information on a change in the attributes or an entry point to the position where the attributes change.

Note that the second embodiment is designed to deal with recorded data conforming to the DVD-VR format that were recorded not by an optical disk provided with a functional feature of automatically adding an entry point to a position where attributes change in the recording operation but by an ordinary optical disk or data to which an entry point was added but has been erased for some reason or another. Therefore, such data does not explicitly show the point where attributes change in a VOB.

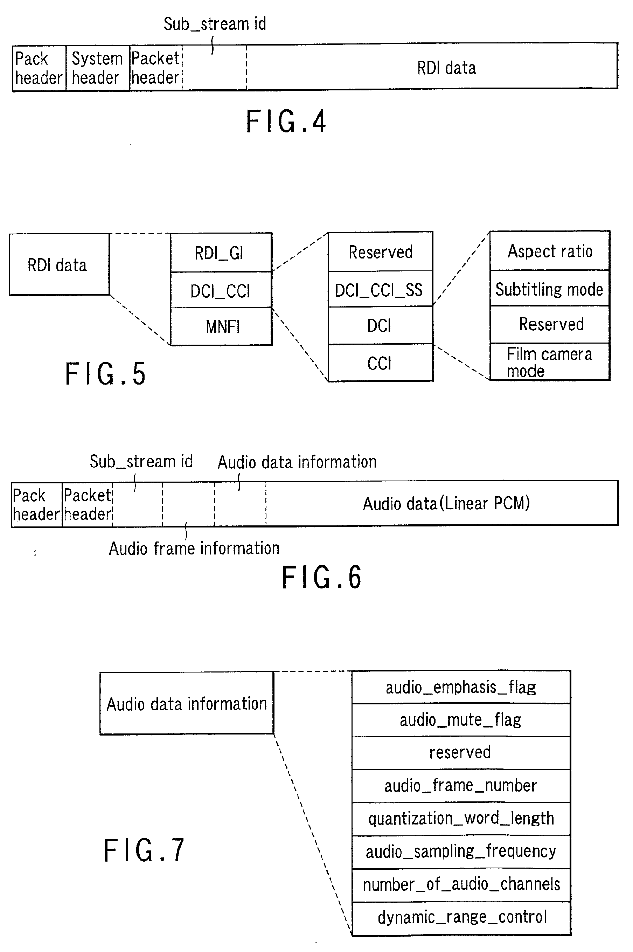

Firstly, RDI_PCK will be described. As shown in FIG. 4, RDI_PCK includes Pack header, System header, Packet header, Sub_stream_id and RDI data. FIG. 5 schematically illustrates an RDI data that has a region for describing the aspect ratio in DCI (Display Control Information). Since RDI_PCK is located at the head of each VOBU, the change in the aspect ratio can be detected for each VOBU by checking the aspect ratio described in the RDI_PCK.

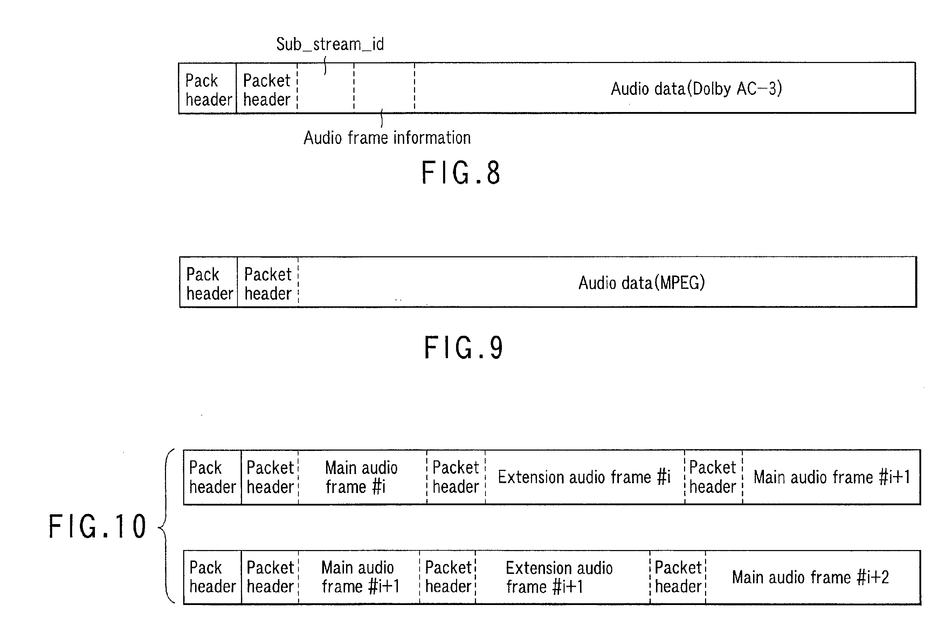

Now, A_PCK will be described. FIGS. 6, 8, 9 and 10 respectively illustrate the configurations of A_PCKs of linear PCM, Dolby AC-3, MPEG Audio format 1, MPEG Audio format 2. FIG. 7 shows the configuration of Audio data information of linear PCM. While it is possible to detect the change in the audio channel mode for each A_PCK by means of number_of_audio_channel in Audio data information in the case of linear PCM, no other information that corresponds to Audio data information of linear PCM exists. In such cases, however, the change in the channel mode can be detected from the information in the elementary stream, although the processing operation will be time consuming if compared with the case of linear PCM, because the elementary stream has to be checked. In this way, it is possible to detect the change in the attributes from the stream of the recorded video information.

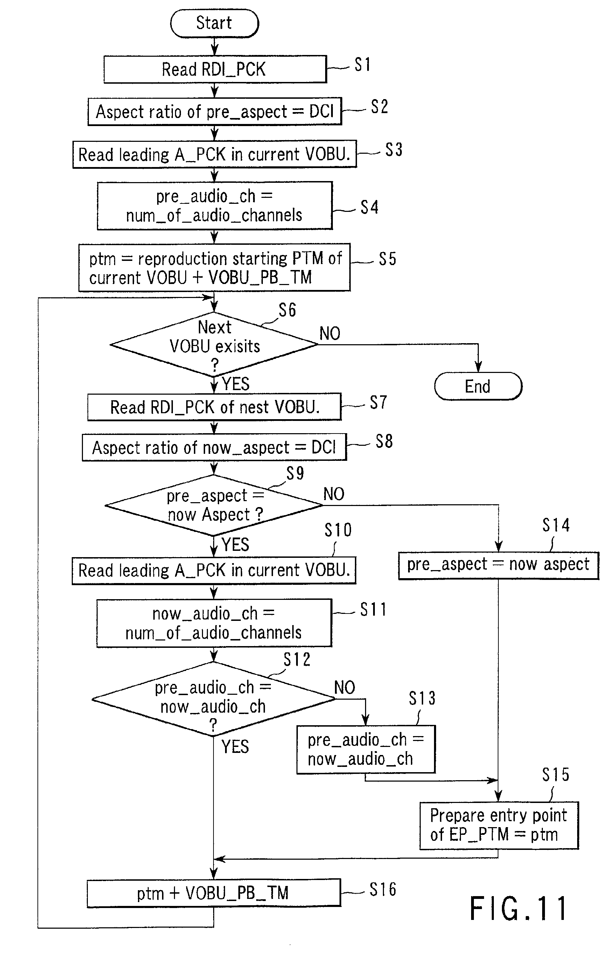

Now, the processing operation of adding information on the change in the attributes to the recorded video information of the second embodiment will be described by referring to the flow chart of FIG. 11, which schematically illustrates the processing operation of the second embodiment. For the purpose of simplicity, assume that the Audio coding mode is linear PCM and one or more than one A_PCK exists in each VOBU. Also assume that an entry point may be added to part or all of the VOB specified by the user and a VOBU is specified as the smallest unit.

Referring to the flow chart of FIG. 11, firstly, RDI_PCK of the leading VOBU to be processed is read in (S1) and the aspect ratio described in DCI is selected as pre_aspect (S2). Then, data is read in on a sector by sector basis until the leading A_PCK is found in the same VOBU (S3) and number_of_audio_channels in Audio data information is selected as pre_audio_ch (S4). Additionally, reproduction starting PTM of the same VOBU is determined and the sum of the PTM and the reproduction time of the same VOBU (VOBU_PB_TM, see FIG. 2) is defined as ptm (S5).

Thereafter, the leading sector (RDI_PCK) of the next VOBU is read in (S7) and the aspect ratio described in DCI is selected as now_aspect (S8), which is then compared with the aspect ratio pre_aspect of the preceding VOBU (S9). If they are different from each other (NO at S9), it is determined that the aspect ratio changes from this VOBU and pre_aspect is substituted by now_aspect (S14). Then, an entry point is prepared by using ptm for EPPTM (S15).

If, on the other hand, the aspect ratio now_aspect of the current VOBU and the aspect ratio pre_aspect of the preceding VOBU are same and identical with each other (YES at S9), the audio channel mode is checked. Then, data is read in on a sector by sector basis until the leading A_PCK is found in the same VOBU (S10) and number_of_audio_channels in Audio data information is selected as now_audio_ch (S11), which is then compared with the channel mode pre_audio_ch of the preceding VOBU (S12). If they are different from each other (NO at S12), it is determined that the channel mode changes from this VOBU and pre_audio_ch is substituted by now_audio_ch (S14). Then, an entry point is prepared by using ptm for EPPTM (S15).

If, on the other hand, no change takes place between the current VOBU and the preceding VOBU (YES at S12) or an entry point is prepared (S15), VOBU_PB_TM of the current VOBU is added to ptm (S16) and the steps from S7 to S16 are repeated until all the processing operation is completed for all the VOBUs to be processed.

Thus, with the second embodiment of the invention, in the case of video information conforming to the DVD-VR format that has already been recorded and for which entry points are added and recorded, the entry points can be utilized when the data is converted into data conforming to the DVD-V format, although the operation of adding an entry point to each position where the attributes change may be time consuming to some extent, making it is no longer necessary to check the stream in detail each time a data conversion is conducted, which advantageously reduces the processing time.

### <Other Embodiments>

In other embodiments, the data reproducing operation of an optical disk apparatus can be conducted efficiently by utilizing information on the change in attributes according to the invention. In other words, information on the change in attributes according to the invention can be used not only for operations of converting video information conforming to the DVD_VR format into video information conforming to the DVD_V format but also for reproducing video information conforming to the DVD_VR format. A change in attributes as used herein refers to video attributes and audio attributes. For example, information on a change in attributes may be provided for a change in terms of mono / stereo / dual-mono. Similarly, information on a change in attributes may be provided for a change in terms of aspect ratio. Then, an information reproducing operation can be conducted by referring to such information on a highly stable basis.

Those skilled in the art may be able to carry out the present invention by referring to the above described embodiments. Additionally, the above described embodiments may be modified or altered in various different ways without departing from the scope of the invention by those who are skilled in the art but do not have any particular ability of inventing the principle of the invention in a broad sense of the word.

For example, while the above described embodiments are optical disk apparatus, similar effects and advantages can be obtained by using a hard disk or an IC card as recording medium.

As described above in detail, an optical disk apparatus according to the invention can perform an operation of converting information conforming to one format into information conforming to another different format quickly and reliably because it is provided with a feature of automatically adding information on the change in the attributes, to the position where the video attributes and the audio attributes change, as entry point in a recording operation so that it is possible to detect the position at which the attributes change from the management information without reediting the recorded data and hence it is no longer necessary to check the stream elaborately when converting recorded data conforming to the DVD-VR format into data conforming to the DVD-V format.

Additionally, an optical disk apparatus according to the invention is provided with a feature for analyzing recorded data conforming to the DVD-VR format and automatically adding information on the change in attributes to the position where the video attributes and the audio attributes change as entry point so that it is now possible to further add information on the change in attributes to video information recorded by an ordinary optical disk apparatus in such a way that the position at which the attributes change can be detected from the management information. As a result, an operation of converting recorded data conforming to the DVD-VR format into data conforming to the DVD-V format can be conducted quickly and reliably.

## Claims

1. A disk apparatus **characterized by** comprising:
detection section (16, 17, 18) to detect a change in the attributes of the video information; and
processing section (16, 17, 18, 22, 28, 29, 31, 60, 64) to perform a predetermined processing operation on the basis of the change in the attributes of the video information detected by the detecting section.

2. The disk apparatus according to claim 1, **characterized in that**
the processing section includes:
generation section (16, 17, 18) to generate positional information indicating the position of occurrence of the change in the attributes as entry point information when the detection section detects the change in the attributes; and
recording section (22, 28, 29) to record the entry point information generated by the generation section and the video information in a recording area of the disk according to the DVD-VR (Video Recording) format.

3. The disk apparatus according to claim 1, **characterized in that** the detection section includes:
reproduction section (64, 60, 31) to irradiate a laser beam to a disk rotated at a predetermined number of revolutions per unit time, receive the reflected wave and reproduce video information conforming to the DVD-VR format according to the received reflected wave; and
detection section (16, 17, 18) to detect the change in the attributes of the video information according to the video information reproduced by the reproduction section; and
the processing section includes:
generation section (16, 17, 18) to generate positional information indicating the position of occurrence of the change in the attributes as entry point information upon detecting the change in the attributes of the video information; and
recording section (22, 28, 29) to add the entry point information generated by the generation section to a predetermined position of the video information and record the video information.

4. The disk apparatus according to claim 1, **characterized in that**
the detection section includes:
section (16, 17, 18) to irradiate a laser beam to a disk rotated at a predetermined number of revolutions per unit time, receive the reflected wave and detect video information conforming to the DVD-VR format and entry point information containing positional information on the change in the attributes of the video information according to the received reflected wave; and
the processing section includes:
conversion section (16, 17, 18) to convert the video information conforming to the DVD-VR format into video information conforming to the DVD-V (Video) format in correspondence to the attributes of the video information and the position showing the change on the basis of the entry point information and output the video information obtained by the conversion.

5. The disk apparatus according to claim 1, **characterized in that**
the detection section includes:
a section (16, 17, 18) to irradiate a laser beam to a disk rotated at a predetermined number of revolutions per unit time, receive the reflected wave and detect video information and entry point information containing positional information on the change in the attributes of the video information according to the received reflected wave; and
the processing section includes:
reproduction section (60, 31, 32) to reproduce the video information in correspondence to the attributes of the video information and the positional information showing the change on the basis of the entry point information.

6. A disk processing method **characterized by** comprising:
a detection step (16, 17, 18) to receive video information and detect a change in the attributes of the video information; and
a processing step (16, 17, 18, 22, 28, 29, 31, 60, 64) to perform a predetermined processing operation on the basis of the change in the attributes of the video information detected by the detection step.

7. The disk processing method according to claim 6, **characterized in that**
the processing step includes:
a generation step (16, 17, 18) to generate positional information indicating the position of occurrence of the change in the attributes as entry point information upon detection of the change in the attributes in the detection step; and
a recording step (22, 28, 29) to record the entry point information generated in the generation step and the video information in a recording area of the disk according to the DVD-VR (Video Recording) format.

8. The disk processing method according to claim 6, **characterized in that** the detection step includes:
a reproduction step (64, 60, 31) to irradiate a laser beam to a disk being driven to rotate at a predetermined number of revolutions per unit time, receive the reflected wave and reproduce video information conforming to the DVD-VR format according to the received reflected wave; and
a step (16, 17, 18) to detect the change in the attributes of the video information according to the video information reproduced in the reproduction step; and
the processing step includes:
a generation step (16, 17, 18) to generate positional information indicating the position of occurrence of the change in the attributes as entry point information upon detecting the change in the attributes of the video information; and
a recording step (22, 28, 29) to add the entry point information generated in the generation step to a predetermined position of the video information and record the video information.

9. The disk processing method according to claim 6, **characterized in that** the detection step includes:
a step (16, 17, 18) to irradiate a laser beam to a disk rotated at a predetermined number of revolutions per unit time, receive the reflected wave and detect video information conforming to the DVD-VR format and entry point information containing positional information on the change in the attributes of the video information according to the received reflected wave; and
the processing step includes:
a conversion step (16, 17, 18) to convert the video information conforming to the DVD-VR format into video information conforming to the DVD-V (Video) format in correspondence to the attributes of the video information and the position showing the change on the basis of the entry point information and output the video information obtained by the conversion.

10. The disk processing method according to claim 6, **characterized in that** the detection step includes:
a step (16, 17, 18) to irradiate a laser beam to a disk being driven to rotate at a predetermined number of revolutions per unit time, receive the reflected wave and detect video information and entry point information containing positional information on the change in the attributes of the video information according to the received reflected wave; and
the processing step includes:
a reproduction step (60, 31, 32) to reproduce the video information in correspondence to the attributes of the video information and the positional information showing the change on the basis of the entry point information.
